# FASCICULE DE BREVET EUROPEEN

(11) **EP 0 442 410 B1**
(45) Date de publication et mention de la délivrance du brevet: **01.02.1995**
(21) Numéro de dépôt: 91101861.2
(22) Date de dépôt: 11.02.1991
(51) Int. Cl.: B01D 63/06

(54) **Dispositif à membrane pour filtration, séparation ou réaction catalytique**
Membranvorrichtung für Filtrieren, Trennen oder katalytische Reaktion
Membrane device for filtration, separation or catalytic reaction

(30) Priorité: 16.02.1990 FR 9001897
(43) Date de publication de la demande: 21.08.1991
(73) Titulaire: SOCIETE DES CERAMIQUES TECHNIQUES, 65460 Bazet (FR)
(72) Inventeur: Soria, Raymond, F-65460 Bazet (FR); Gillot, Jacques, F-65310 Laloubère (FR)
(74) Mandataire: Weinmiller, Jürgen

(56) Documents cités:
- EP-A- 0 154 295
- US-A- 3 914 358

## Description

La présente invention concerne un dispositif à membrane pour filtration, séparation, ou réaction catalytique comprenant un bloc macroporeux, encore appelé support, en matériau céramique fritté, en métal fritté ou en verre fritté, percé de un ou plusieurs canaux longitudinaux parallèles dont la surface est recouverte d'une membrane constituée d'une ou plusieurs couches, en matière organique ou en un matériau céramique fritté, ou en verre fritté, éventuellement modifié par ajout de substances ayant des propriétés catalytiques, de porosité plus fine que celle du bloc ou perméable par diffusion ; ce dispositif comprend en outre des moyens d'introduction d'un fluide à épurer à une extrémité des canaux, des moyens de recueil d'un fluide épuré situés au niveau de la surface latérale dudit bloc, et des moyens de recueil d'un fluide résiduel à l'autre extrémité des canaux.

On a déjà proposé dans les brevets FR-A-2 061 933 et US-A 4 069 157 des dispositifs de filtration dans lesquels le liquide à filtrer arrivant par une chambre d'entrée à une extrémité d'entrée du bloc s'écoule dans les canaux jusqu'à une extrémité de sortie vers une chambre de sortie ; le filtrat traverse radialement la membrane des canaux, puis le bloc, de porosité plus grossière que celle de la membrane, avant d'être recueilli à l'extérieur du bloc ; un liquide résiduaire est recueilli dans la chambre de sortie et recyclé.

Ces dispositifs sont sujets à des fuites de liquide à filtrer aux extrémités d'entrée et de sortie du bloc.

Sur les faces d'entrée et de sortie du bloc, ce liquide est en contact entre les canaux avec le bloc de porosité grossière, et une certaine fraction passe à travers le bloc pour rejoindre le filtrat, dont il vient diminuer la pureté. On ne peut donc obtenir une pureté élevée qu'en effectuant plusieurs filtrations successives. Ces fui tes sont d'autant plus importantes que le diamètre moyen des pores du bloc macroporeux est élevé. Or ce diamètre est en général de l'ordre de 4 à 20 »m.

On pourrait monter le bloc entre joints parallèles, mais ceci entraîne des difficultés de montage et n'évite pas les fuites résiduelles.

On a déjà proposé dans le brevet EP-A 0 154 295 un procédé de réduction des fuites par remplissage des extrémités du bloc macroporeux par un matériau céramique microporeux, c'est-à-dire ayant des pores d'un diamètre de l'ordre de 1 »m. Mais le procédé décrit, s'il améliore la situation, ne permet pas néanmoins d'obtenir une étanchéité d'extrémité sans défaut : de toutes façons il est totalement insuffisant pour les membranes d'ultrafiltration, ou a fortiori pour les membranes à couche séparatrice organique, telles eue membranes d'osmose inverse ou de pervaporation. Cela est clair dans le cas des membranes d'ultrafiltration, dont les pores ont un diamètre inférieur ou égal à 0,1 »m c'est-à-dire sont beaucoup plus fins que ceux du matériau de remplissage d'extrémité. Si on essaie d'éviter ce problème en réalisant le remplissage d'extrémité au moyen d'un matériau céramique à très petits pores obtenu par imprégnation de l'extrémité du bloc par une suspension de particules très fines, il est alors difficile de maîtriser la pénétration d'une barbotine aussi fine dans des pores aussi grands : on se heurte par ailleurs à de sérieux problèmes de fissuration dus au retrait pendant le frittage du matériau microporeux, ce retrait étant d'autant plus fort que la dimension des particules à fritter est plus faible.

La présente invention a pour but de procurer un dispositif de séparation par membrane et notamment de filtration, qui permette d'obtenir un fluide épuré de pureté élevée à l'aide d'un étanchage de l'extrémité du bloc macroporeux efficace et de bonne solidité mécanique.

La présente invention a pour objet un dispositif à membrane pour filtration, séparation ou de réaction catalytique comportant :
- un bloc macroporeux en matériau céramique fritté, en métal fritté, ou en verre fritté, percé de canaux longitudinaux parallèles dont la surface est recouverte de ladite membrane en une matière organique ou en matériau céramique fritté, ou en verre fritté, de porosité plus fine que celle dudit bloc, ou perméable par diffusion, ledit matériau étant éventuellement modifié par dopage par des catalyseurs,
- des moyens d'introduction d'un fluide à épurer à la première extrémité desdits canaux,
- des moyens de recueil d'un fluide épuré situés au niveau de la surface latérale dudit bloc,
- des moyens de recueil d'un fluide résiduel à la seconde extremité desdits canaux,
la porosité des deux extrémités dudit bloc macroporeux étant remplie d'un matériau fritté poreux,
caractérisé par le fait que ledit matériau comprend au moins deux types de grains, les grains du premier type dits "grains d'ossature" ayant un diamètre compris entre environ 1 % et 20 % du diamètre des pores dudit bloc, les grains du deuxième type dits "grains de finition" ayant un diamètre compris entre environ 0,2 % et 20 % de celui desdits grains d'ossature et étant logés dans la porosité définie par lesdits grains d'ossature.

La porosité des extrémités du bloc macroporeux est inférieure à 50 %, et de préférence 40 % de leur porosité initiale, c'est-à-dire de leur porosité avant remplissage (la mesure de cette porosité est faite par exemple par la méthode de pycnométrie).

Le diamètre moyen des pores restant dans la partie ainsi étanchée de l'extrémité du bloc, tel que mesuré par porosimétrie au mercure, est au plus égal à 0,5 »m et de préférence au plus égal à 0,2 »m.

La mesure du diamètre du plus gros pore traversant, par la méthode du point de bulle, telle que décrite par T.H. MELTZER et al. (Bulletin of the parenteral drug association. vol. 65 (4), 1971, p. 165-174), montre une forte diminution de ce diamètre par rapport aux extrémités avant remplissage.

Le matériau constituant les grains d'ossature, ou le matériau constituant les grains de finition, ou les deux, peuvent être des matériaux céramiques de composition identique à celle du bloc macroporeux ou à celle de la membrane. Dans le premier cas, le dispositif à membrane présente peu de risques de fissuration pouvant résulter de contraintes thermiques lors de sa fabrication ou d'opérations telles que la filtration des fluides chauds, le nettoyage par des fluides chauds ou la stérilisation à la vapeur d'eau, du fait que les coefficients de dilatation du support et du matériau d'ossature et/ou de finition sont les mêmes. La résistance à la corrosion de ces derniers est également aussi élevée que celle du matériau du support.

Dans le cas fréquent où les matériaux du bloc macroporeux, de la membrane et des grains d'ossature et de finition sont de même composition, on bénéficie également d'une égalité des coefficients de dilatation et de la résistance à la corrosion de l'ensemble des matériaux constituant l'élément filtrant.

Selon un autre mode de réalisation, les grains de finition sont en polymère organique, tel que le polytétrafluoréthylène.

Dans une variante du dispositif selon l'invention, le matériau céramique poreux qui remplit la porosité des extrémités du bloc est constitué de trois types de grains : des grains d'un premier type dénommés "grains d'ossature", qui ont une dimension moyenne comprise entre environ 2 % et environ 20 % du diamètre moyen des pores du bloc macroporeux, des grains d'un deuxième type dénommés "grains intermédiaires", qui ont une dimension moyenne comprise entre environ 2 % et environ 20 % de la dimension moyenne des grains d'ossature, et des grains d'un troisième type appelés "grains de finition", qui ont une dimension moyenne comprise entre environ 2 % et environ 20 % de la dimension moyenne des grains intermédiaires.

Dans une autre variante du dispositif selon l'invention, le matériau d'ossature et le matériau de finition, ou au moins deux des matériaux constituant les grains d'ossature, les grains intermédiaires et les grains de finition, ont des points isoélectriques qui diffèrent d'au moins une unité, et de préférence d'au moins trois unités, sur l'échelle des pH. A titre d'exemples particulièrement avantageux, ledit bloc macroporeux et les grains d'ossature sont en alumine, et les grains de finition sont en oxyde de titane ou en zircone.

Dans le cas des membranes de filtration, la fonction du remplissage ainsi constitué dans la porosité de l'extrémité du support est d'arrêter des particules ou colloïdes en suspension dans le liquide à filtrer. Ceci est obtenu soit par un effet de géométrie, la particule étant de trop grande dimension pour pouvoir passer dans la succession de pores de forme irrégulière qui constitue la porosité résiduelle de l'extrémité du bloc, soit par un effet d'attraction entre la particule et la surface des grains constituant le remplissage. Un tel effet d'attraction, bien connu dans la filtration dite "en profondeur" ou dans la floculation entre particules en suspension dans un liquide, est lié au potentiel de surface du matériau filtrant. Si ce potentiel est de signe différent de celui de la particule, la particule est attirée et vient se fixer sur la surface. Les potentiels de surface sont caractérisés par la position du point isoélectrique du matériau sur l'échelle des pH. Un tel mécanisme d'arrêt des particules est rendu beaucoup plus efficace si le matériau d'ossature et le matériau de finition ont des potentiels de surface nettement différents.

L'accumulation par ce mécanisme de particules sur la surface des grains d'ossature ou de finition facilite alors substantiellement le colmatage par ces particules de la porosité résiduelle de l'extrémité étanchée, ce qui augmente encore l'efficacité de l'étanchage.

La présente invention a également pour objet un procédé de remplissage de la porosité des extrémités du bloc macroporeux d'un dispositif à membrane précédemment défini, caractérisé par le fait qu'il comprend :
- une première étape dans laquelle on prépare une première barbotine concentrée défloculée d'une poudre du matériau d'ossature, constituée de particules ayant un diamètre moyen compris entre environ 0,5 % et environ 20 % du diamètre moyen des pores du bloc macroporeux, on trempe successivement chacune des extrémités du bloc macroporeux dans cette barbotine, de préférence en agitant celle-ci aux ultrasons, on sèche, puis on effectue un traitement de consolidation du matériau d'ossature,
   et
- une deuxième étape dans laquelle on prépare une seconde barbotine concentrée défloculée d'une poudre du matériau de finition, constituée de particules ayant un diamètre moyen compris entre environ 0,1 % et environ 20 % du diamètre moyen des grains d'ossature, on trempe successivement chacune des extrémités du bloc macroporeux dans cette barbotine, de préférence en agitant celle-ci aux ultrasons, on sèche, puis on effectue un traitement thermique de consolidation du matériau de finition.

Lorsque le matériau d'ossature est une céramique, le traitement de consolidation de ce matériau est un frittage.
Il en est de même pour le matériau de finition.

Dans le cas où le matériau de remplissage de la porosité du bloc macroporeux comprend des grains d'ossature, des grains intermédiaires et des grains de finition, le procédé de remplissage de la porosité du bloc diffère du procédé exposé ci-dessus en ce qu'il comprend une étape supplémentaire située après le frittage ou la consolidation du matériau d'ossature, ladite étape comprenant :
- la préparation d'une barbotine concentrée défloculée d'une poudre du matériau céramique des grains intermédiaires, constituée de préférence de particules ayant une dimension moyenne comprise entre environ 1 % et environ 20 % de la dimension moyenne des grains d'ossature,
- le trempage de chacune des extrémités du bloc macroporeux dans cette barbotine, de préférence en agitant celle-ci aux ultrasons.
- le séchage, puis le frittage ou la consolidation du matériau des grains intermédiaires.

Dans une variante du procédé où les grains d'ossature, les grains intermédiaires (s'il y en a) ou les grains de finition sont en céramique, la poudre mise en suspension dans une barbotine et dont seront issus les grains intermédiaires et les grains de finition, n'est pas la poudre du matériau céramique constituant ces grains, mais une poudre d'un précurseur de ce matériau ; il s'agit par exemple d'une poudre d'hydroxyde quand le matériau est un oxyde. Dans le traitement thermique effectué après le séchage, on réalise successivement la transformation du précurseur en matériau intermédiaire, ou en matériau de finition, puis le frittage de matériau.

Dans une autre variante du procédé, deux des étapes successives de remplissage (c'est-à-dire étape d'ossature et étape de finition, s'il n'y a pas de grains intermédiaires, ou, s'il y a des grains intermédiaires, soit étape d'ossature et étape intermédiaire, soit étape intermédiaire et étape de finition) sont remplacées par une étape unique utilisant une barbotine concentrée, défloculée, contenant les deux types de particules correspondant auxdites étapes, et un frittage ou une consolidation à la température adaptée à la consolidation des grains les plus fins.

Le cas échéant, l'une quelconquue des étapes peut être répétée une ou plusieurs fois, si on n'obtient pas en une seule fois la densité de remplissage désirée.

Le frittage du matériau d'ossature sera fait de préférence à une température et pendant une durée assez élevées pour que les grains de poudre provenant de la barbotine deviennent solidement liés les uns aux autres et avec les grains du support avec lesquels ils sont en contact, mais toutefois suffisamment basses pour que le phénomène de grossissement de grain par lequel certains grains peuvent croître en absorbant des grains plus petits, reste limité, la dimension moyenne des grains d'ossature restant après frittage inférieure ou égale à deux fois et de préférence inférieure à 1,5 fois la dimension moyenne des particules de poudre présentes dans la barbotine. Le respect de cette condition assure, d'une part, la limitation du retrait de frittage de l'ossature et par là la limitation du risque d'ouverture de fissures dans l'ossature, et d'autre part, la maîtrise du diamètre des pores de l'ossature, maîtrise qui est nécessaire pour pouvoir réaliser correctement la deuxième étape.

La même règle s'applique au frittage du matériau intermédiaire, s'il y en a un. Le frittage du matériau de finition sera également fait de préférence à une température et pendant une durée assez élevées pour que les grains de poudre provenant de la barbotine deviennent solidement liés les uns aux autres et aux grains d'ossature ou éventuellement aux grains intermédiaires avec lesquels ils sont en contact, mais toutefois suffisamment basses pour que le phénomène de grossissement de grains reste limité, la dimension moyenne des grains de finition restant après frittage inférieure ou égale à deux fois et de préférence inférieure à 1,5 fois la dimension moyenne des particules de poudre présentes dans la barbotine. Il s'agit là encore de limiter la tendance à l'ouverture de fissures par suite du retrait de frittage et de bien maîtriser la dimension des pores formés entre les grains de finition ou entre les grains de finition et les grains intermédiaires ou d'ossature.

L'élément filtrant est fabriqué en ajoutant au support diverses structures céramiques poreuses qui constituent des sous-couches intermédiaires éventuelles entre le support et la couche séparatrice, la couche séparatrice elle-même dans le cas où elle est en céramique, les grains d'ossature, les grains intermédiaires éventuels et les grains de finition de l'étanchage d'extrémité. Le frittage de chacune de ces structures est fait à une température bien déterminée. Les opérations de mise en place, puis de frittage des grains d'ossature, puis des grains intermédiaires et de finition peuvent être effectuées, suivant les besoins, avant la mise en place et le frittage des couches, ou après, ou fréquemment être intercalées entre ces opérations sur les couches. Un même traitement thermique peut également servir au frittage simultané d'une couche et des grains d'ossature ou des grains intermédiaires ou de finition.

D'autres caractéristiques et avantages de la présente invention apparaîtront au cours de la description suivante de modes de réalisation donnés à titre illustratif mais nullement limitatif. Dans le dessin annexé :
- La figure 1 est une vue très schématique en coupe longitudinale de l'extrémité d'un dispositif à membrane pour filtration selon l'invention.
- La figure 2 est une vue très schématique d'un détail agrandi A de la figure 1.
- La figure 3 est une vue très schématique d'un détail agrandi B de la figure 2.
- La figure 4 est une variante de la figure 3.
- La figure 5 est une vue très schématique montrant une phase du procédé de réalisation du dispositif à membrane de la figure 1.

### EXEMPLE 1 :

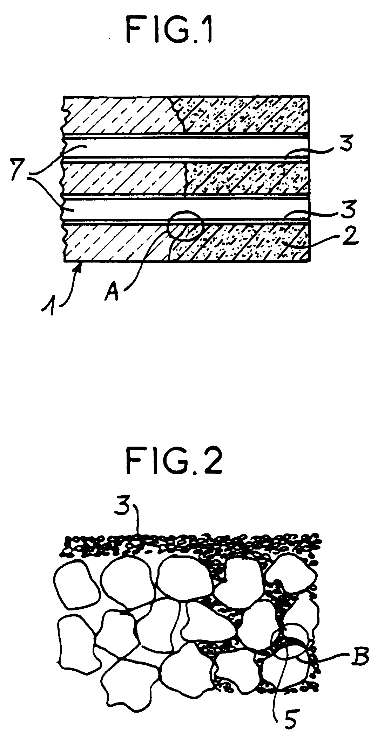

On voit partiellement dans la figure 1 un bloc d'alumine 1 en forme de prisme hexagonal ayant un diamètre entre plats de 28 mm et 1 020 mm de long, percé de 19 canaux de 4 mm de diamètre, c'est-à-dire à géométrie multicanal, dont la porosité est de 40 % et le diamètre moyen de pores de 15 »m. Pour étancher ses extrémités 2, on prépare une première barbotine 10 de particules d'alumine ayant une dimension moyenne de 2,5 microns. La composition pondérale de cette barbotine est :

| | |
|---|---|
| - Alumine | 63,0% |
| - Acide polyacrylique | 0,8% |
| - Eau | 36,2% |

L'acide polyacrylique est utilisé en tant qu'agent tensioactif pour la défloculation de l'alumine.

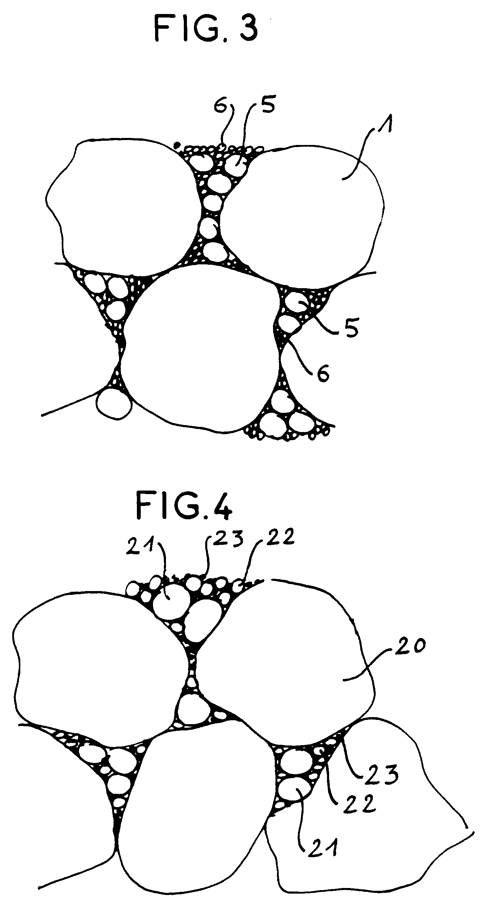

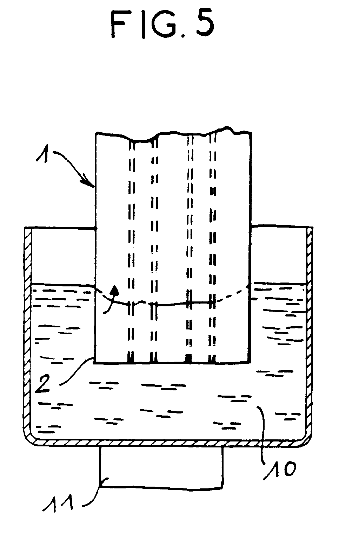

On imprègne chacune des extrémités 2 du bloc macroporeux 1 comme cela est schématisé dans la figure 5. La barbotine est agitée par des ultrasons émis par un générateur 11. La zone imprégnée s'étend jusqu'à atteindre une hauteur de 20 mm. On sèche les extrémités 2 du bloc 1, puis, on le soumet à une cuisson à 1 500°C en atmosphère oxydante. On obient une zone remplie de grains frittés 5 (voir figures 2 et 3) entre lesquels subsiste une porosité résiduelle. Ces grains ont une dimension moyenne de 2,5 microns et constituent les grains d'ossature.

On dépose ensuite dans les canaux 7 de ce bloc macroporeux 1 une couche d'alumine 3 de 20 à 30 microns d'épaisseur et de diamètre de pore moyen de 1 micron. Cette couche est frittée à une température de 1 350°C.

On réalise alors le deuxième remplissage de manière analogue au premier en utilisant une barbotine de particules de boehmite (hydroxyde d'aluminium utilisé ici comme précurseur d'alumine) ayant une dimension moyenne de 0,1 micron. La composition pondérale de cette barbotine est :

| | |
|---|---|
| - Boehmite | 33,0% |
| - Acide polyméthacrylique | 1,5% |
| - Eau | 65,5% |

L'acide polyméthacrylique est utilisé en tant qu'agent tensioactif pour la défloculation de la boehmite.

On imprégne chacune des extrémités 2 du bloc macroporeux 1. La barbotine est encore agitée par des ultrasons. La zone imprégnée s'étend jusqu'à atteindre une hauteur de 25 mm. On sèche les extrémités 2 du bloc, puis on le soumet à une cuisson à 1 150°C en atmosphère oxydante. Au cours de la cuisson la boehmite se transforme en alumine comme cela apparaît dans la figure 3. On obtient une zone remplie de grains 6 d'alumine frittés d'une dimension moyenne de 0,2 »m constituant les grains de finition. L'observation microscopique montre que les grains de finition 6 sont incorporés dans la porosité située entre les grains d'ossature 5.

La mesure de la porosité de l'extrémité du bloc donne une valeur de 15 % soit 37,5 % de la porosité initiale. La porosimétrie au mercure effectuée sur l'extrémité ainsi étanchée du bloc macroporeux mesure des pores de 0,08 micron de diamètre moyen.

### EXEMPLE 2 :

Pour étancher l'extrémité d'une variante d'un élément de filtration à géométrie multicanal en alumine ayant une porosité de 33 % et des pores de 10 microns de diamètre moyen, on prépare une première barbotine de particules d'alumine ayant une dimension moyenne de 1,0 micron. La composition pondérale de cette barbotine est :

| | |
|---|---|
| - Alumine | 55,0% |
| - Acide amino phosphonique | 0,8% |
| - Alcool polyvinylique | 1,0% |
| - Eau | 43,2% |

L'acide amino phosphonique est utilisé en tant qu'agent tensioactif pour la défloculation de l'alumine.

On imprégne comme précédemment chacune des extrémités du bloc macroporeux. La barbotine est agitée par des ultrasons. La zone imprégnée s'étend jusqu'à atteindre une hauteur de 20 mm. On sèche les extrémités du bloc, puis on le soumet à une cuisson à 1 350°C en atmosphère oxydante. On obtient à chaque extrémité une zone remplie de grains frittés entre lesquels subsiste une porosité résiduelle. Ces grains ont une dimension moyenne de 1,0 micron, et constituent les grains d'ossature 5.

On dépose ensuite dans les canaux 7 de ce bloc macroporeux une couche d'alumine 3 de 20 à 30 microns d'épaisseur et de diamètre de pore moyen de 0,8 micron. Cette couche est frittée à une température de 1 300°C. On réalise alors le deuxième remplissage en utilisant une barbotine de particules de zircone ayant une dimension moyenne de 0,05 micron. La zircone est choisie car son point isoélectrique (pie) de 5,8 unités pH, est situé à 2,7 unités pH de celui de l'alumine (dont le pie est de 8,5 unités pH). La composition pondérale de cette barbotine est :

| | |
|---|---|
| - Zircone | 28,0% |
| - Acide polyméthacrylique | 0,5% |
| - Eau | 71,5% |

L'acide polyméthacrylique est utilisé en tant qu'agent tensioactif pour la défloculation de la zircone.

On imprégne chacune des extrémités du bloc macroporeux comme décrit plus haut. La zone imprégnée s'étend jusqu'à atteindre une hauteur de 25 mm. On sèche les extrémités du bloc, puis on le soumet à une cuisson à 600°C en atmosphère oxydante. On obtient une zone remplie de grains frittés constituant les grains de finition 6. L'observation microscopique montre que les grains de finition sont incorporés dans la porosité résiduelle issue du premier remplissage et que leur dimension moyenne est de 0,1 »m, soit un grossissement d'un facteur deux par rapport aux particules initiales.

La mesure de la porosité de l'extrémité du bloc donne une valeur de 10 % soit 30 % de la porosité initiale. La porosimétrie au mercure effectuée sur l'extrémité étanchée du bloc macroporeux mesure des pores de 0,12 micron de diamètre moyen.

### EXEMPLE 3 :

Pour étancher l'extrémité d'un tube non illustré (diamètre interne : 30 mm ; diamètre externe : 36 mm) en acier inoxydable fritté ayant une porosité de 20% et des pores de 20 microns de diamètre moyen, on prépare une première barbotine de particules d'oxyde de titane ayant une dimension moyenne de 1,5 micron. La composition pondérale de cette barbotine est :

| | |
|---|---|
| - Oxyde de titane | 75,0% |
| - Ester phospho-organique | 2,8% |
| - Eau | 22,2% |

L'acide phospho-organique est utilisé en tant qu'agent tensioactif pour la défloculation de l'oxyde de titane.

On imprègne chacune des extrémités du tube comme illustré par la figure 5. La zone imprégnée s'étend jusqu'à atteindre une hauteur de 30 mm. On sèche les extrémités du bloc, puis, on le soumet à une cuisson à 1000°C. On obtient une zone remplie de grains frittés entre lesquels subsiste une porosité résiduelle. Ces grains ont une dimension moyenne de 1,5 micron et constituent les grains d'ossature.

On dépose à l'intérieur de ce tube une couche de zircone de 15 microns d'épaisseur et de diamètre de pore moyen de 0,3 micron. Cette couche est frittée à une température de 900°C.

On réalise alors le deuxième remplissage en utilisant une suspension de particules de polytétrafluoroéthylène ayant une dimension moyenne de 0,1 micron (suspension du type SOREFLON 60), comportant environ 58 % massique de solide.

On imprègne chacune des extrémités du tube mais la suspension n'est pas agitée par des ultrasons. La zone imprégnée s'étend jusqu'à atteindre une hauteur de 18 mm. On sèche les extrémités du tube, puis on le soumet à une cuisson à 370°C. On obtient une zone remplie de grains de polytétrafluoroéthylène frittés d'une dimension moyenne de 0,1 »m constituant les grains de finition. L'observation microscopique montre que les grains de finition sont incorporés dans la porosité située entre les grains d'ossature.

La mesure de la porosité de l'extrémité du tube donne une valeur de 5 % soit 25 % de la porosité initiale.

La porosimétrie au mercure effectuée sur l'extrémité étanchée du tube macroporeux mesure des pores de 0,05 micron de diamètre.

### EXEMPLE 4 :

Pour étancher un bloc d'alumine de géométrie multicanal, analogue à celui de la figure 1, ayant une porosité de 33 % et des pores de 10 microns de diamètre moyen, on prépare une barbotine comportant des particules d'alumine ayant une dimension moyenne de 1,0 micron et des particules de zircone précalcinées ayant une dimension moyenne de 0,07 micron. La composition pondérale de cette barbotine est :

| | |
|---|---|
| - Alumine | 45% |
| - Zircone | 28% |
| - Eau | 26% |
| - Acide chlorhydrique 36 N | 1% |

L'acide chlorhydrique est utilisé en tant qu'agent de dispersion pour les particules.

On imprègne chacune des extrémités 2 du bloc macroporeux comme précédemment. La zone imprégnée s'étend jusqu'à atteindre une hauteur de 25 mm. On sèche les extrémités du bloc, puis on le soumet à une cuisson à 800°C en atmosphère oxydante. Cette température est déterminée en fonction des particules de zircone. L'observation microscopique de cette zone montre que les grains de finition 6 (zircone) sont incorporés dans la porosité résiduelle formée par les grains d'ossature 5 (alumine). La dimension moyenne des grains après frittage correspond à la dimension moyenne des particules correspondantes présentes dans la barbotine.

La mesure de la porosité de l'extrémité du bloc donne une valeur de 12 % soit 36 % de la porosité initiale.

La porosimétrie au mercure effectuée sur l'extrémité étanchée du bloc macroporeux mesure des pores de 0,1 micron de diamètre.

### EXEMPLE 5 :

Pour étancher un bloc en alumine 20 (voir figure 4) ayant une porosité de 50 % et des pores de 20 microns de diamètre moyen, on prépare une première barbotine de particules d'oxyde de titane ayant une dimension moyenne de 3,5 microns. La composition pondérale de cette barbotine est :

| | |
|---|---|
| - Oxyde de titane | 75,0% |
| - Ester phospho-organique | 2,8% |
| - Eau | 22,2% |

L'acide phospho-organique est utilisé en tant qu'agent tensioactif pour la défloculation de l'oxyde de titane. Le point isoélectrique de l'oxyde de titane est de 4,7 unité pH.
On imprègne chacune des extrémités du bloc macroporeux. La barbotine est agitée par des ultrasons. La zone imprégnée s'étend jusqu'à atteindre une hauteur de 30 mm. On sèche les extrémités du bloc, puis on le soumet à une cuisson à 1200°C en atmosphère oxydante. On obtient une zone remplie de grains frittés entre lesquels subsiste une porosité résiduelle. Ces grains 21 ont une dimension moyenne de 3,5 microns et constituent les grains d'ossature.

On dépose ensuite dans les canaux de ce bloc macroporeux une couche d'alumine de 20 microns d'épaisseur et de diamètre de pore moyen de 0,2 micron. Cette couche est frittée à une température de 1200°C.

On réalise alors un deuxième remplissage en utilisant une barbotine de particules de silice ayant une dimension moyenne de 0,6 micron. La composition pondérale de cette barbotine est :

| | |
|---|---|
| - Silice | 45,0% |
| - Acide polyacrylique | 1,1% |
| - Eau | 53,9% |

L'acide polyacrylique est utilisé en tant qu'agent tensioactif pour la défloculation de la silice. Le point isoélectrique de la silice est de 2,2 unités pH. Le choix du couple silice - oxyde de titane est basé sur la différence des points isoélectriques (2,6 unités pH).

On imprègne chacune des extrémités du bloc macroporeux. La barbotine est agitée par des ultrasons. La zone imprégnée s'étend jusqu'à atteindre une hauteur de 25 mm. On sèche les extrémités du bloc, puis on le soumet à une cuisson à 1000°C en atmosphère oxydante. On obtient une zone remplie de grains frittés. L'observation microscopique montre que les grains intermédiaires 22 (silice) sont incorporés dans la porosité située entre les grains d'ossature 21 (oxyde de titane). Les grains de silice grossissent légèrement jusqu'à une dimension de 0,7 micron et forment une porosité résiduelle.

On réalise enfin un troisième remplissage en utilisant une suspension de particules de polytétrafluoroéthylène ayant une dimension moyenne de 0,1 micron (suspension de type SOREFLON 60)

On imprègne chacune des extrémités du bloc macroporeux, mais la suspension n'est pas agitée par des ultrasons. La zone imprégnée s'étend jusqu'à atteindre une hauteur de 18 mm. On sèche les extrémités du bloc, puis on le soumet à une cuisson à 370°C. On obtient une zone remplie de grains frittés 23. L'observation microscopique de cette zone montre une structure emboîtée où les grains de finition (grains de polytétrafluoroéthylène)sont incorporés dans la porosité résiduelle issue des particules de dimensions plus élevées. Les particules de polytétrafluoroéthylène gardent leur dimension initiale de 0,1 micron.

La mesure de la porosité de l'extrémité du bloc donne une valeur de 5 % soit 10 % de la porosité initiale.

La porosimétrie au mercure effectuée sur l'extrémité étanchée du bloc macroporeux mesure des pores de 0,1 micron de diamètre moyen.

### EXEMPLE 6 :

Pour étancher un bloc d'alumine de forme tubulaire non illustrée, dont la porosité est de 40% et le diamètre moyen de pores de 15 »m, on prépare une première barbotine de particules d'alumine ayant une dimension moyenne de 1,5 micron. La composition pondérale de cette barbotine est :

| | |
|---|---|
| - Alumine | 63,0% |
| - Acide polyacrylique | 0,8% |
| - Eau | 36,2% |

L'acide polyacrylique est utilisé en tant qu'agent tensioactif pour la défloculation de l'alumine.

On imprègne chacune des extrémités du bloc macroporeux. La barbotine est agitée par des ultrasons. La zone imprégnée s'étend jusqu'à atteindre une hauteur de 20 mm. On sèche les extrémités du bloc, puis, on le soumet à une cuisson à 1400°C en atmosphère oxydante. On obtient une zone remplie de grains frittés entre lesquels subsiste une porosité résiduelle. Ces grains ont une dimension moyenne de 1,5 micron et constituent les grains d'ossature.

On dépose ensuite dans les canaux de ce bloc macroporeux une couche d'alumine de 20 à 30 microns d'épaisseur et de diamètre de pore moyen de 0,8 micron. Cette couche est frittée à une température de 1300°C.

On réalise alors le deuxième remplissage en utilisant une barbotine de particules d'oxyde de titane ayant une dimension moyenne de 0,2 micron. La composition pondérale de cette barbotine est :

| | |
|---|---|
| - Oxyde de titane | 33,0% |
| - Acide polyméthacrylique | 1,5% |
| - Eau | 65,5% |

L'acide polyméthacrylique est utilisé en tant qu'agent tensioactif pour la défloculation de l'oxyde de titane.

L'oxyde de titane est choisi car son point isoélectrique de 4,7 unités pH est situé à 3,8 unités pH de celui de l'alumine (dont le pie est de 8,5 unités pH).

On imprègne chacune des extrémités du bloc macroporeux à l'aide du dispositif décrit par la figure 5. La barbotine est agitée par des ultrasons. La zone imprégnée sétend jusqu'à atteindre une hauteur de 25 mm. On sèche les extrémités du bloc, puis on le soumet à une cuisson à 1000°C en atmosphère oxydante. On obtient une zone remplie de grains frittés d'une dimension moyenne de 0,2 »m constituant les grains de finition. L'observation microscopique montre que les grains de finition sont incorporés dans la porosité située entre les grains d'ossature.

La mesure de la porosité de l'extrémité du bloc donne une valeur de 12%, soit 30% de la porosité initiale. La porosimétrie au mercure effectuée sur l'extrémité ainsi étanchée du bloc macroporeux mesure des pores de 0,04 micron de diamètre moyen.

### EXEMPLE 7 :

Pour étancher l'extrémité d'une variante d'un élément de filtration à géométrie multicanal en alumine ayant une porosité de 33% et des pores de 10 microns de diamètre moyen et revêtu d'une couche d'alumine à diamètre de pore moyen 0,8 »m on prépare une première barbotine de particules d'alumine ayant une dimension moyenne de 0,3 micron. La composition pondérale de cette barbotine est :

| | |
|---|---|
| - Alumine | 58,0% |
| - Acide amino phosphonique | 1,0% |
| - Alcool polyvinylique | 1,0% |
| - Eau | 40,0% |

L'acide amino phosphonique est utilisé en tant qu'agent tensioactif pour la défloculation de l'alumine.

On imprégne comme précédemment chacune des extrémités du bloc macroporeux. La barbotine est agitée par des ultrasons. La zone imprégnée s'étend jusqu'à atteindre une hauteur de 20 mm. On sèche les extrémités du bloc, puis on le soumet à une cuisson à 1 100°C en atmosphère oxydante. On obtient à chaque extrémité une zone remplie de grains frittés entre lesquels subsiste une porosité résiduelle. Ces grains ont une dimension moyenne de 0,3 »m micron, et constituent les grains d'ossature 5.

On réalise alors le deuxième remplissage en utilisant une barbotine de particules de zircone ayant une dimension moyenne de 0,01 micron. La zircone est choisie car son point isoélectrique (pie) de 5,8 unités pH, est situé à 2,7 unités pH de celui des l'alumine (dont le pie est de 8,5 unités pH). La composition pondérale de cette barbotine est :

| | |
|---|---|
| - Zircone | 28,0% |
| - Acide polyméthacrylique | 0,5% |
| - Eau | 71,5% |

L'acide polyméthacrylique est utilisé en tant qu'agent tensioactif pour la défloculation de la zircone.

On imprégne chacune des extrémités du bloc macroporeux comme décrit plus haut. La zone imprégnée s'étend jusqu'à atteindre une hauteur de 25 mm. On sèche les extrémités du bloc, puis on le soumet à une cuisson à 500°C en atmosphère oxydante. On obtient une zone remplie de grains frittés constituant les grains de finition 6. L'observation microscopique montre que les grains de finition sont incorporés dans la porosité résiduelle issue du premier remplissage et que leur dimension moyenne est de 0,02 »m, soit un grossissement d'un facteur deux par rapport aux particules initiales.

La mesure de la porosité de l'extrémité du bloc donne une valeur de 10% soit 30% de la porosité initiale. La porosimétrie au mercure effectuée sur l'extrémité étanchée du bloc macroporeux mesure des pores de 0,04 micron de diamètre moyen.

Bien entendu l'invention n'est pas limitée aux exemples décrits. Les membranes décrites dans la présente invention et dans les exemples ci-dessus sont utilisées dans des domaines tels que la filtration des liquides ou des gaz, la séparation des gaz ou la réalisation de réacteurs catalytiques.

## Revendications

1. Dispositif à membrane pour filtration, séparation ou de réaction catalytique comportant :
- un bloc macroporeux en matériau céramique fritté, en métal fritté, ou en verre fritté, percé de canaux longitudinaux parallèles dont la surface est recouverte de ladite membrane en une matière organique ou en matériau céramique fritté ou en verre fritté, de porosité plus fine que celle dudit bloc, ou perméable par diffusion, ledit matériau étant éventuellement modifié par dopage par des catalyseurs,
- des moyens d'introduction d'un fluide à épurer à la première extrémité desdits canaux,
- des moyens de recueil d'un fluide épuré situés au niveau de la surface latérale dudit bloc,
- des moyens de recueil d'un fluide résiduel à la seconde extrémité desdits canaux,
la porosité des deux extrémités dudit bloc macroporeux étant remplie d'un matériau fritté poreux,
caractérisé par le fait que ledit matériau comprend au moins deux types de grains, les grains du premier type dits "grains d'ossature" (5) ayant un diamètre compris entre environ 1 % et 20 % du diamètre des pores dudit bloc, les grains du deuxième type dits "grains de finition" (6) ayant un diamètre compris entre environ 0,2 % et 20 % de celui desdits grains d'ossature (5), et étant logés dans la porosité définie par lesdits grains d'ossature.

2. Dispositif à membrane selon la revendication 1, caractérisé par le fait que la porosité desdites extrémités (2) dudit bloc (1) est inférieure à 50 % de la porosité de ce bloc, et, de préférence, inférieure à 40 %.

3. Dispositif à membrane selon l'une des revendications précédentes, caractérisé par le fait que le diamètre moyen des pores des extrémités (2) dudit bloc (1), tel que mesuré par porosimétrie au mercure, est inférieur à 0,5 »m, et de préférence inférieur à 0,2 »m.

4. Dispositif à membrane selon l'une des revendications 1 à 3, caractérisé par le fait que les grains d'ossature (5) sont en un matériau céramique.

5. Dispositif à membrane selon la revendication 4, caractérisé par le fait que les grains de finition sont en un matériau céramique.

6. Dispositif à membrane selon l'une des revendications 1 à 4, caractérisé par le fait que les grains de finition (6) sont en un polymère organique.

7. Dispositif à membrane selon la revendication 6, caractérisé par le fait que les grains de finition (6) sont en polytétrafluoroéthylène.

8. Dispositif à membrane selon l'une des revendications 1 à 7, caractérisé par le fait que les grains d'ossature (5) et les grains de finition (6) sont en des matériaux ayant des points isoélectriques qui diffèrent d'au moins une unité sur l'échelle des pH.

9. Dispositif à membrane selon la revendication 8, caractérisé par le fait que lesdits matériaux ont des points isoélectriques qui diffèrent d'au moins trois unités sur l'échelle des pH.

10. Dispositif à membrane selon la revendication 5, caractérisé par le fait que ledit bloc macroporeux, au moins une des couches déposées sur la surface des canaux, les grains d'ossature et les grains de finition sont en matériau de même composition.

11. Dispositif à membrane selon la revendication 10, caractérisé par le fait que le matériau est l'alumine.

12. Dispositif à membrane selon la revendication 9, caractérisé par le fait que ledit bloc macroporeux et les grains d'ossature sont en alumine et les grains de finition en oxyde de titane.

13. Dispositif à membrane selon la revendication 8, caractérisé par le fait que ledit bloc macroporeux et les grains d'ossature sont en alumine et les grains de finition en zircone.

14. Dispositif à membrane pour filtration, séparation ou de réaction catalytique comportant :
- un bloc macroporeux en matériau céramique fritté, en métal fritté, ou en verre fritté, percé de canaux longitudinaux parallèles dont la surface est recouverte de ladite membrane en une matière organique ou en matériau céramique fritté, ou en verre fritté, de porosité plus fine que celle dudit bloc, ou perméable par diffusion, ledit matériau étant éventuellement modifié par dopage par des catalyseurs,
- des moyens d'introduction d'un fluide à épurer à la première extrémité desdits canaux,
- des moyens de recueil d'un fluide épuré situés au niveau de la surface latérale dudit bloc,
- des moyens de recueil d'un fluide résiduel à la seconde extrémité desdits canaux,
la porosité des deux extrémités dudit bloc macroporeux étant remplie d'un matériau fritté poreux,
caractérisé par le fait que ledit matériau fritté poreux qui remplit la porosité des extrémités du bloc (20) est constitué de trois types de grains, des grains d'un premier type dénommés "grains d'ossature" (21), qui ont une dimension moyenne comprise entre environ 2 % et environ 20 % du diamètre moyen des pores du bloc macroporeux, des grains d'un deuxième type dénommés "grains intermédiaires" (22), qui ont une dimension moyenne comprise entre environ 2 % et environ 20 % de la dimension moyenne des grains d'ossature, et des grains d'un troisième type dénommés "grains de finition" (23) qui ont une dimension moyenne comprise entre environ 2 % et environ 20 % de la dimension moyenne des grains intermédiaires.

15. Procédé de remplissage de la porosité des extrémités du bloc macroporeux d'un dispositif à membrane selon l'une des revendications 1 à 13, caractérisé par le fait qu'il comprend :
- une première étape dans laquelle on prépare une première barbotine concentrée défloculée d'une poudre du matériau d'ossature, constituée de particules ayant un diamètre moyen compris entre environ 0,5 % et environ 20 % du diamètre moyen des pores du bloc macroporeux, on trempe successivement chacune des extrémités du bloc macroporeux dans cette barbotine, on sèche, puis on effectue un frittage du matériau d'ossature,
et
- une deuxième étape dans laquelle on prépare une seconde barbotine concentrée défloculée d'une poudre du matériau de finition, constituée de particules ayant un diamètre moyen compris entre environ 0,1 % et environ 20 % du diamètre moyen des grains d'ossature, on trempe successivement chacune des extrémités du bloc macroporeux dans cette barbotine, on sèche, puis on effectue un frittage du matériau de finition.

16. Procédé de remplissage selon la revendication 15, caractérisé par le fait que le matériau d'ossature est une céramique.

17. Procédé de remplissage selon la revendication 16, dans lequel le matériau de finition est une céramique.

18. Procédé de remplissage selon la revendication 17, caractérisé par la fait que les particules contenues dans la seconde barbotine sont des particules d'un précurseur du matériau de finition et que l'on prévoit une étape intermédiaire supplémentaire pour transformer ledit précurseur en matériau de finition.

19. Procédé de remplissage selon la revendication 16, caractérisé par le fait que le frittage dudit matériau d'ossature se conduit de manière que la dimension moyenne des grains d'ossature soit inférieure ou égale à deux fois, et de préférence à 1,5 fois la dimension des particules dans la barbotine correspondante.

20. Procédé de remplissage selon l'une des revendications 17 et 19, caractérisé par le fait que le frittage dudit matériau de finition est conduit de manière que la dimension moyenne des grains de finition soit inférieure ou égale à deux fois, et de préférence à 1,5 fois, la dimension des particules de la poudre dans la barbotine correspondante.

21. Procédé de remplissage de la porosité des extrémités d'un dispositif à membrane selon la revendication 14, caractérisé par le fait qu'il comprend :
- une première étape dans laquelle on prépare une première barbotine concentrée défloculée d'une poudre du matériau d'ossature, constituée de particules ayant un diamètre moyen compris entre 1 % et 20 % du diamètre moyen des pores du bloc macroporeux, on trempe successivement chacune des extrémités du bloc macroporeux dans cette barbotine, on sèche, puis on effectue un frittage du matériau d'ossature,
- une seconde étape dans laquelle on prépare une seconde barbotine concentrée défloculée d'une poudre des grains intermédiaires, constituée de particules ayant une dimension moyenne comprise entre 1 % et 20 % de la dimension moyenne des grains d'ossature, on trempe chacune des extrémités du bloc macroporeux dans cette barbotine on sèche et on fritte lesdits grains intermédiaires,
- une troisième étape dans laquelle on prépare une troisième barbotine concentrée défloculée d'une poudre du matériau de finition, constituée de particules ayant un diamètre moyen compris entre environ 1 % et environ 20 % du diamètre moyen des grains intermédiaires, on trempe successivement chacune des extrémités du bloc macroporeux dans cette barbotine, on sèche, puis on effectue un frittage du matériau de finition.

22. Procédé de remplissage de la porosité des extrémités du bloc macroporeux d'un dispositif à membrane selon l'une des revendications 1 à 13, caractérisé par le fait que l'on prépare une barbotine concentrée défloculée d'une poudre comportant un mélange de la poudre du matériau d'ossature et de la poudre du matériau de finition, que l'on trempe successivement chacune des extrémités du bloc macroporeux dans cette barbotine, que l'on sèche et que l'on effectue un frittage du matériau de finition et du matériau d'ossature.

23. Procédé de remplissage selon la revendication 22, caractérisé par le fait que le matériau d'ossature est une céramique, que le matériau de finition est une céramique.

24. Procédé de remplissage selon la revendication 23, caractérisé par le fait que le frittage dudit matériau de finition est conduit de manière que la dimension moyenne des grains de finition soit inférieure ou égale à deux fois et de préférence à 1,5 fois la dimension des particules de la poudre correspondante dans la barbotine.

25. Procédé de remplissage selon la revendication 21, caractérisé par le fait que, dans ladite barbotine, les particules de matériau de finition sont remplacées par des particules d'un précurseur de ce matériau de finition, et que l'on prévoit une étape intermédiaire supplémentaire pour transformer ledit précurseur en matériau de finition.

26. Procédé de remplissage selon l'une des revendications 15, 21, 22, caractérisé par le fait que chaque barbotine est agitée aux ultrasons.

## Claims

1. A membrane device for filtration, separation, or catalytic reaction, the device comprising:
a macroporous block of sintered ceramic material, of sintered metal, or of sintered glass, the block being pierced by parallel longitudinal channels whose surfaces are covered by said membrane made of an organic material or a sintered ceramic material or sintered glass, the porosity of the membrane being finer than that of the block, or the membrane being permeable by diffusion, said material optionally being modified by catalyst doping;
means for injecting a fluid to be purified into said channels via first ends thereof;
purified fluid collecting means on the lateral surface of said block;
means for collecting residual fluid from second ends of said channels;
the pores at both ends of said macroporous block being filled with a porous sintered filler material;
the device being characterized by the fact that said filler material comprises at least two types of grain: grains of a first type called "frame" grains (5) having a diameter lying in the range about 1% to about 20% of the diameter of the pores of said block; and grains of the second type called "finishing" grains (6) having a diameter lying in the range about 0.2% to about 20% of the diameter of the frame grains (5), and being received in the pores defined between said frame grains.

2. A membrane device according to claim 1, characterized by the fact that the porosity of said ends (2) of said block (1) is less than 50% of the porosity of said block, and preferably less than 40% thereof.

3. A membrane device according to claim 1 or 2, characterized by the fact that the mean pore diameter at the ends (2) of said block (1) as measured by mercury porosimetry is less than 0.5 »m, and preferably less than 0.2 »m.

4. A membrane device according to any one of claims 1 to 3, characterized by the fact that the frame grains (5) are made of ceramic material.

5. A membrane device according to claim 4, characterized by the fact that the finishing grains are made of ceramic material.

6. A membrane device according to any one of claims 1 to 4, characterized by the fact that the finishing grains (6) are made of an organic polymer.

7. A membrane device according to claim 6, characterized by the fact that the finishing grains (6) are made of polytetrafluoroethylene.

8. A membrane device according to any one of claims 1 to 7, characterized by the fact that the frame grains (5) and the finishing grains (6) are made of materials having isoelectric points that differ by not less than one unit on the pH scale.

9. A membrane device according to claim 8, characterized by the fact that said materials have isoelectric points that differ by at least three units on the pH scale.

10. A membrane device according to claim 5, characterized by the fact that said macroporous block, at least one of the layers deposited on the surfaces of its channels, the frame grains, and the finishing grains are all made of a material having the same composition.

11. A membrane device according to claim 10, characterized by the fact that the material is alumina.

12. A membrane device according to claim 9, characterized by the fact that said macroporous block and the frame grains are made of alumina while the finishing grains are made of titanium oxide.

13. A membrane device according to claim 8, characterized by the fact that said macroporous block and the frame grains are made of alumina while the finishing grains are made of zirconia.

14. A membrane device for filtration, separation, or catalytic reaction, the device comprising:
a macroporous block of sintered ceramic material, of sintered metal, or of sintered glass, the block being pierced by parallel longitudinal channels whose surfaces are covered by said membrane made of an organic material or a sintered ceramic material or sintered glass, the porosity of the membrane being finer than that of the block, or the membrane being permeable by diffusion, said material optionally being modified by catalyst doping;
means for injecting a fluid to be purified into said channels via first ends thereof;
purified fluid collecting means on the lateral surface of said block;
means for collecting residual fluid from second ends of said channels;
the pores at both ends of said macroporous block being filled with a porous sintered filler material;
characterized by the fact that said filler material which fills the pores at the ends of the block (20) is constituted by three types of grain: grains of a first type called "frame" grains (21) having a mean diameter lying in the range about 2% to about 20% of the mean diameter of the pores of the macroporous block; grains of a second type called "intermediate" grains (22) having a mean diameter lying in the range about 2% to about 20% of the mean diameter of the frame grains; and grains of a third type called "finishing" grains (23) having a mean diameter lying in the range about 2% to about 20% of the mean diameter of the intermediate grains.

15. A filling method for filling the pores at the ends of the macroporous block of a membrane device according to any one of claims 1 to 13, the method being characterized by the fact that it comprises:
a first step during which a first concentrated deflocculated slip of a frame material powder is prepared, the powder being constituted by particles having a mean diameter lying in the range about 0.5% to about 20% of the mean diameter of the pores of the macroporous block, each of the ends of the macroporous block being successively dipped in said slip, dried, and then subjected to frame material sintering; and
a second step during which a second concentrated deflocculated slip of finishing material powder is prepared, the powder being constituted by particles having a mean diameter lying in the range about 0.1% to about 20% of the mean diameter of the frame grains, each of the ends of the macroporous block being dipped in succession in said slip, dried, and then subjected to sintering the finishing material.

16. A filling method according to claim 15, characterized by the fact that the frame material is a ceramic.

17. A filling method according to claim 16, in which the finishing material is a ceramic.

18. A filling method according to claim 17, characterized by the fact that the particles contained in the second slip are particles of a precursor for the finishing material, an additional intermediate step being provided for transforming said precursor into the finishing material.

19. A filling method according to claim 16, characterized by the fact that said frame material is sintered in such a manner that the mean diameter of the frame grains is not greater than twice and preferably 1.5 times the diameter of the particles in the corresponding slip.

20. A filling method according to claim 17 or 19, characterized by the fact that said finishing material is sintered in such a manner that the mean diameter of the finishing grains is no greater than twice, and preferably 1.5 times the diameter of the particles in the corresponding slip.

21. A filling method for filling the pores at the ends of a membrane device according to claim 14, the method being characterized by the fact that it comprises:
a first step during which a first concentrated deflocculated slip of a frame material powder is prepared, the powder being constituted by particles having a mean diameter lying in the range 1% to 20% of the mean diameter of the pores of the macroporous block, each of the ends of the macroporous block being successively dipped in said slip, dried, and then subjected to frame material sintering;
a second step during which a second concentrated deflocculated slip of intermediate grain powder is prepared, the powder being constituted by particles having a mean diameter lying in the range 1% to 20% of the mean diameter of the frame grains, each of the ends of the macroporous block being dipped in said slip, being dried, and said intermediate grains being sintered; and
a third step during which a third concentrated deflocculated slip of finishing material powder is prepared, the powder being constituted by particles having a mean diameter lying in the range about 1% to about 20% of the mean diameter of the intermediate grains, each of the ends of the macroporous block being dipped in succession in said slip, dried, and then subjected to sintering the finishing material.

22. A filling method for filling the pores at the ends of a macroporous block of a membrane device according to any one of claims 1 to 13, characterized by the fact that a concentrated deflocculated slip is prepared of a powder comprising a mixture of frame material powder and of finishing material powder, each of the ends of the macroporous block are dipped in succession in said slip, the ends are dried, and sintering is performed on the finishing material and the frame material.

23. A filling method according to claim 22, characterized by the fact that the frame material is a ceramic, the finishing material is a ceramic.

24. A filling method according to claim 23, characterized by the fact that said finishing material is sintered in such a manner that the mean diameter of the finishing grains is no greater than twice and preferably 1.5 times the particle diameter of the corresponding powder in the slip.

25. A filling method according to claim 21, characterized by the fact that the particles of finishing material in said slip are replaced by particles of a precursor for said finishing material, and an additional intermediate step is provided for transforming said precursor into the finishing material.

26. A filling method according to any one of claims 15, 21, and 22, characterized by the fact that each slip is stirred ultrasonically.

## Patentansprüche

1. Membranvorrichtung zur Filterung, Trennung oder katalytischen Reaktion
- mit einem makroporösen Block aus gesintertem Keramikmaterial, gesintertem Metall oder gesintertem Glas, der parallele Längskanäle aufweist, deren Oberfläche mit der Membran aus einem organischen, einem gesinterten keramischen oder einem gesinterten Glasmaterial bedeckt ist, dessen Porosität feiner als die des Blocks ist oder das für Diffusion durchlässig ist, wobei das Material ggf. durch Dotierung mit Katalysatoren modifiziert ist,
- mit Mitteln zur Einführung eines zu reinigenden Fluids am ersten Ende der Kanäle,
- mit Mitteln zur Entnahme eines gereinigten Fluids, die sich in Höhe der seitlichen Oberfläche des Blocks befinden,
- mit Mitteln zur Entnahme eines Restfluids am zweiten Ende der Kanäle, wobei die Poren an den Enden des makroporösen Blocks mit einem porösen gesinterten Material gefüllt sind,
dadurch gekennzeichnet, daß das Material mindestens zwei Arten von Körnern enthält, wobei die Körner der ersten Art (5) Gerippekörner genannt werden und einen Durchmesser zwischen etwa 1 und 20% des Porendurchmessers des Blocks besitzen, während die Körner der zweiten Art (6) Körner der endgültigen Füllung genannt werden und einen Durchmesser zwischen etwa 0,2% und 20% des Durchmessers der Gerippekörner (5) besitzen und in den durch die Gerippekörner definierten Poren sitzen.

2. Membranvorrichtung nach Anspruch 1, dadurch gekennzeichnet, daß die Porosität der Enden (2) des Blocks (1) weniger als halb so groß wie die Porosität des Blocks ist und vorzugsweise weniger als das 0,4-fache dieser Porosität beträgt.

3. Membranvorrichtung nach einem der vorhergehenden Ansprüche, dadurch gekennzeichnet, daß der mittlere Porendurchmesser der Enden (2) des Blocks (1), wie er mit der Quecksilberporosimetrie gemessen wird, unter 0,5 »m und vorzugsweise unter 0,2 »m liegt.

4. Membranvorrichtung nach einem der Ansprüche 1 bis 3, dadurch gekennzeichnet, daß die Gerippekörner (5) aus einem Keramikmaterial bestehen.

5. Membranvorrichtung nach Anspruch 4, dadurch gekennzeichnet, daß die Körner der endgültigen Füllung aus einem Keramikmaterial bestehen.

6. Membranvorrichtung nach einem der Ansprüche 1 bis 4, dadurch gekennzeichnet, daß die Körner der endgültigen Füllung (6) aus einem organischen Polymermaterial bestehen.

7. Membranvorrichtung nach Anspruch 6, dadurch gekennzeichnet, daß die Körner der endgültigen Füllung (6) aus Polytetrafluoräthylen bestehen.

8. Membranvorrichtung nach einem der Ansprüche 1 bis 7, dadurch gekennzeichnet, daß die Gerippekörner (5) und die Körner der endgültigen Füllung (6) aus Materialien mit isoelektrischen Punkten bestehen, die um mindestens eine Einheit auf der pH-Skala voneinander entfernt liegen.

9. Membranvorrichtung nach Anspruch 8, dadurch gekennzeichnet, daß die Materialien isoelektrische Punkten besitzen, die um mindestens drei Einheiten auf der pH-Skala voneinander entfernt liegen.

10. Membranvorrichtung nach Anspruch 5, dadurch gekennzeichnet, daß der makroporöse Block, mindestens eine der auf die innere Oberfläche der Kanäle aufgebrachten Schichten, die Gerippekörner und die Körner der endgültigen Füllung aus Materialien gleicher Zusammensetzung bestehen.

11. Membranvorrichtung nach Anspruch 10, dadurch gekennzeichnet, daß das Material Aluminiumoxid ist.

12. Membranvorrichtung nach Anspruch 9, dadurch gekennzeichnet, daß der makroporöse Block und die Gerippekörner aus Aluminiumoxid sind, während die Körner der endgültigen Füllung aus Titanoxid bestehen.

13. Membranvorrichtung nach Anspruch 8, dadurch gekennzeichnet, daß der makroporöse Block und die Gerippekörner aus Aluminiumoxid und die Körner der endgültigen Füllung aus Zirkonoxid bestehen.

14. Membranvorrichtung zur Filterung, Trennung und katalytischen Reaktion
- mit einem makroporösen Block aus gesintertem Keramikmaterial, aus gesintertem Metall oder gesintertem Glas, durch den parallele Längskanäle verlaufen, deren Oberfläche mit der Membran aus einem organischen Material oder einem gesinterten Keramikmaterial oder einem gesinterten Glas mit einer feineren Porosität als die des Blocks bedeckt ist oder einem Material, das per Diffusion durchlässig ist und das ggf. durch Dotierung mit Katalysatoren modifiziert ist,
- mit Mitteln zum Einführen eines zu reinigenden Fluids an den ersten Enden der Kanäle,
- mit Mitteln zur Entnahme eines gereinigten Fluids in Höhe der seitlichen Oberfläche des Blocks,
- mit Mitteln zur Entnahme eines Restfluids am zweiten Ende der Kanäle, wobei die Poren an den beiden Enden des makroporösen Blocks mit einem porösen gesinterten Material gefüllt sind,
dadurch gekennzeichnet, daß das poröse gesinterte Material, mit dem die Poren der Enden des Blocks (20) gefüllt sind, aus drei Arten von Körnern besteht, nämlich Körnern einer ersten Art (21), die Gerippekörner genannt werden und deren mittlere Abmessung zwischen etwa 2% und etwa 20% des mittleren Durchmessers der Poren des makroporösen Blocks liegt, Körnern einer zweiten Art (22), die Verbindungskörner genannt werden und deren mittlere Abmessung zwischen etwa 2% und etwa 20% des mittleren Abmessung der Gerippekörner liegt, und Körnern einer dritten Art (23), die Körner der endgültigen Füllung genannt werden und eine mittlere Abmessung zwischen etwa 2% und etwa 20% der mittleren Abmessung der Verbindungskörner besitzen.

15. Verfahren zum Füllen der Poren an den Enden des makroporösen Blocks einer Membranvorrichtung nach einem der Ansprüche 1 bis 13, dadurch gekennzeichnet, daß
- in einem ersten Verfahrensschritt eine erste konzentrierte und entflockte Schlämmung eines Pulvers des Gerippematerials bestehend aus Partikeln eines mittleren Durchmessers zwischen etwa 0,5 und etwa 20% des mittleren Durchmessers der Poren des makroporösen Blocks vorbereitet wird, in die nacheinander jedes der Enden des makroporösen Blocks eingetaucht wird, worauf diese Enden getrocknet und einer Sinterung des Gerippematerials ausgesetzt werden,
- und in einem zweiten Schritt eine zweite konzentrierte entflockte Schlämmung eines Pulvers des Materials der endgültigen Füllung vorbereitet wird, bestehend aus Partikeln mit einem mittleren Durchmesser zwischen etwa 0,1% und ungefähr 20% des mittleren Durchmessers der Gerippekörner, worauf nacheinander jedes der Enden des makroporösen Blocks in diese Schlämmung getaucht wird, dann getrocknet und dann das Material der endgültigen Füllung gesintert wird.

16. Füllverfahren nach Anspruch 15, dadurch gekennzeichnet, daß das Gerippematerial ein Keramikmaterial ist.

17. Füllverfahren nach Anspruch 16, in dem das Material der endgültigen Füllung ein Keramikmaterial ist.

18. Füllverfahren nach Anspruch 17, dadurch gekennzeichnet, daß die in der zweiten Schlämmung enthaltenen Partikel Partikel eines Prekursors des Materials der endgültigen Füllung sind und daß ein zusätzlicher Zwischenverfahrensschritt zur Umwandlung dieses Prekursors in das Material der endgültigen Füllung vorgesehen ist.

19. Füllverfahren nach Anspruch 16, dadurch gekennzeichnet, daß die Sinterung des Gerippematerials so erfolgt, daß die mittlere Abmessung der Gerippekörner kleiner oder gleich 2 mal und vorzugsweise 1,5-mal der Abmessung der Partikel in der entsprechenden Schlämmung ist.

20. Füllverfahren nach einem der Ansprüche 17 und 19, dadurch gekennzeichnet, daß die Sinterung des Materials der endgültigen Füllung so erfolgt, daß die mittlere Abmessung der Körner der endgültigen Füllung kleiner oder gleich zweimal, vorzugsweise 1,5-mal der Abmessung der Partikel des Pulvers in der entsprechenden Schlämmung ist.

21. Verfahren zum Füllen der Poren an den Enden einer Membranvorrichtung nach Anspruch 14, dadurch gekennzeichnet, daß es aufweist:
- einen ersten Verfahrensschritt, in dem eine erste konzentrierte entflockte Schlämmung eines Pulvers des Gerippematerials vorbereitet wird, bestehend aus Partikeln mit einem mittleren Durchmesser zwischen 1% und 20% des mittleren Durchmessers der Poren des makroporösen Blocks, worauf nacheinander jedes der Enden des makroporösen Blocks in diese Schlämmung getaucht, dann getrocknet und dann einer Sinterung des Gerippematerials unterworfen wird,
- einen zweiten Verfahrensschritt, in dem eine zweite konzentrierte entflockte Schlämmung eines Pulvers aus Körnern des Verbindungsmaterials vorbereitet wird, die aus Partikeln mit einem mittleren Durchmesser zwischen 1% und 20% der mittleren Abmessung der Gerippekörner besteht, worauf jedes der Enden des makroporösen Blocks in diese Schlämmung eingetaucht und dann einer Trocknung und einer Sinterung der Verbindungskörner unterworfen wird,
- einen dritten Verfahrensschritt, in dem eine dritte konzentrierte entflockte Schlämmung eines Pulvers des Materials der endgültigen Füllung vorbereitet wird, die aus Partikeln mit einem mittleren Durchmesser zwischen etwa 1% und etwa 20% der mittleren Abmessung der Verbindungskörner besteht, worauf nacheinander die beiden Enden des makroporösen Blocks in diese Schlämmung eingetaucht und getrocknet werden und das Material der endgültigen Füllung gesintert wird.

22. Verfahren zum Füllen der Poren an den Enden des makroporösen Blocks einer Membranvorrichtung nach einem der Ansprüche 1 bis 13, dadurch gekennzeichnet, daß eine konzentrierte entflockte Schlämmung eines Pulvers vorbereitet wird, das eine Mischung des Pulvers des Gerippematerials und des Pulvers der endgültigen Füllung enthält, worauf nacheinander jedes Ende des makroporösen Blocks in diese Schlämmung eingetaucht wird und anschließend einer Trocknung und einer Sinterung des Materials der endgültigen Füllung und des Gerippematerials unterworfen wird.

23. Füllverfahren nach Anspruch 22, dadurch gekennzeichnet, daß das Material der Gerippekörner ein Keramikmaterial ist und daß das Material der endgültigen Füllung auch ein Keramikmaterial ist.

24. Füllverfahren nach Anspruch 23, dadurch gekennzeichnet, daß die Sinterung des Materials der endgültigen Füllung so abläuft, daß die mittlere Abmessung der Körner der endgültigen Füllung kleiner oder gleich zweimal, vorzugsweise 1,5-mal der Abmessung der Partikel des entsprechenden Pulvers in der Schlämmung ist.

25. Füllverfahren nach Anspruch 21, dadurch gekennzeichnet, daß in der Schlämmung die Partikel des Materials der endgültigen Füllung durch Partikel eines Prekursors dieses Materials der endgültigen Füllung ersetzt sind und daß ein zusätzlicher Zwischenschritt vorgesehen ist, um diesen Prekursor in das Material der endgültigen Füllung umzuwandeln.

26. Füllverfahren nach einem der Ansprüche 15, 21 und 22, dadurch gekennzeichnet, daß jede Schlämmung mittels Ultraschallwellen in Bewegung versetzt wird.
